# EUROPÄISCHE PATENTSCHRIFT

(11) **EP 2 882 558 B1**
(45) Veröffentlichungstag und Bekanntmachung des Hinweises auf die Patenterteilung: **26.10.2016**
(21) Anmeldenummer: 13747666.9
(22) Anmeldetag: 08.08.2013
(51) Int. Cl.: B23D 31/04

(54) **VORRICHTUNG ZUM BESÄUMEN VON WALZGUT**
DEVICE FOR TRIMMING ROLLED MATERIAL
DISPOSITIF DE ROGNAGE D'UN PRODUIT LAMINÉ

(30) Priorität: 09.08.2012 DE 102012214137
(43) Veröffentlichungstag der Anmeldung: 17.06.2015
(73) Patentinhaber: SMS group GmbH, 40237 Düsseldorf (DE)
(72) Erfinder: SOHL, Ralf-Hartmut, 42699 Solingen (DE); BERG, Robert, 40764 Langenfeld (DE); MUSTAFI, Emir, 40699 Erkrath (DE); TEMME, Stephan, 40591 Düsseldorf (DE); WILMS, Henning, 40724 Hilden (DE)
(74) Vertreter: Klüppel, Walter
(86) Internationale Anmeldenummer: PCT/EP2013/066628
(87) Internationale Veröffentlichungsnummer: WO 2014/023801

(56) Entgegenhaltungen:
- DE-A1- 19 824 710
- JP-A- S58 160 014
- US-A- 3 069 949
- US-A- 5 367 952

## Beschreibung

### Technisches Gebiet

Die vorliegende Erfindung betrifft eine Vorrichtung zum Besäumen von Walzgut, bevorzugt zum Besäumen der Längskanten von laufendem Walzgut wie beispielsweise Metallbändern in einem Walzwerk, gemäß dem Oberbegriff des Anspruchs 1. Eine solche Vorrichtung ist aus US 5 367 953 A bekannt.

### Stand der Technik

Zum Besäumen von Walzgut, bevorzugt zum Besäumen der Längskanten von Walzgut in einem Walzwerk, ist es bekannt, diese Besäumung mittels einer Besäumschere durchzuführen. Unterschiedliche Ausbildungen solcher Besäumscheren sind beispielsweise aus der WO 02/36294 A1, der DE 37 41 219 A1 oder der EP 0 642 865 A1 bekannt.

Um den abgeschnittenen Saum transportfähig aufzubereiten ist es bekannt, den Saum zu Ballen aufzuwickeln, wobei die entsprechenden Schrottballen üblicherweise beim Aufwickeln mittels einer Rolle verdichtet werden und dann in einem Schrottkübel gesammelt werden.

Weiterhin ist es bekannt, den abgetrennten Saum mittels Zerhackern beziehungsweise Saumscheren in kleine, chargierbare Stücke zu zerteilen. Entsprechende Saumscheren sind beispielsweise aus der DE 20 2005 005 911 U1 oder der DE 1 502 998 bekannt.

Des Weiteren ist aus der JP S58 160014 A eine Methode und eine Vorrichtung zum Behandeln eines von einem Materialstreifen abgetrennten Saumes bekannt, wobei stromauf einer Bewegungsrichtung vor einer Besäumschere eine Ausklinkmaschine angeordnet ist.

Aus der DE 198 24 710 A1 ist ein Verfahren und eine Vorrichtung zum Besäumen von Flachmaterial bekannt, wobei zur Beendigung bzw. Unterbrechung eines Besäumvorgangs die Bewegung des Flachmaterials gestoppt und eine Kreismesserbesäumschere entgegen der Bewegungsrichtung unter Beschreibung eines kreisförmigen Schnittes aus dem Saumbereich geschwenkt werden kann. Hierzu weist die Vorrichtung eine Schneideinheit auf, die sich aus der Kreismesserbesäumschere als Schneidkopf und Mitteln zum Schwenken des Schneidkopfes zusammensetzt.

Zudem ist in der US 3 069 949 A eine Vorrichtung zum Schneiden von länglichen Seitenkanten eines Blechbandes beschrieben, welche Schneidmesser zum Abtrennen von Seitenstreifen umfasst, wobei die abgetrennten Seitenstreifen mittels einer Führung von den Schneidmessern zu einem Hackmesser geführt werden. Die Führung umfasst unter anderem eine Rutsche, welche einen öffenbaren Deckel aufweiset, der sich durch Druck einer Anhäufung von abgetrennten Seitenstreifen nach oben hin automatisch öffnen kann, um eine Blockade der Führung zu verhindern.

Ferner ist aus der US 5 367 953 A eine Bearbeitungsvorrichtung für abgetrennte Besäumungsstreifen einer Metallband-Schlitzmaschine beschrieben, bei welcher hinter einem Zerschneider zum kontinuierlichen Zerschneiden der abgetrennten Besäumungsstreifen eine Abfallpresse zum Pressen der zerschnittenen Besäumungsstreifen angeordnet ist.

Weitere Ausgestaltungen sind in Form von Schrottpressen beziehungsweise Saumpressen bekannt, bei welchen der abgetrennte Saum beziehungsweise die abgetrennten Saumstreifen über eine Schrottpresse zu Quadern verpresst werden, welche dann nachfolgend in Schrottkübeln gesammelt werden und der weiteren Verwendung zugeführt werden.

Diese drei Typen der Behandlung des Saumschrotts werden üblicherweise in Abhängigkeit von der Dicke, der Festigkeit sowie der Geschwindigkeit des zu besäumenden Walzgutes eingesetzt.

Da hier unterschiedliches Walzgut und insbesondere unterschiedliche Metallbänder produziert werden, steigt die Palette der mit einer Vorrichtung zum Besäumen von Walzgut zu besäumenden Produkte immer weiter an. Es müssen beispielsweise sowohl dicke und hochfeste als auch dünne und weiche Bänder auf der gleichen Anlage besäumt werden.

Jede der Schrottbehandlungsvorrichtungen, welche oben genannt wurden, stößt bei bestimmten Produktkonstellationen an ihre Grenzen. Beispielsweise besteht bei dem Wickeln hochfester Säume zu Ballen die Gefahr, dass sich der entsprechende Schrottballen beim Transport in die Schrottkübel wieder entspannt und teilweise abwickelt. Hieraus ergibt sich zum einen ein deutlicher Verlust an Transportvolumen und zum anderen besteht eine inhärente Verletzungsgefahr für die jeweiligen, den Prozess überwachenden Personen.

Ein Saumschneider, mittels welchem der Saum in kurze Stücke zerteilt werden soll, ist besonders bei dünnen Bändern und hohen Anlagengeschwindigkeiten störanfällig. Hier kann es dazu kommen, dass die Bänder lediglich geknickt werden oder sich gar im Saumschneider verwickeln.

Hochfeste Bänder verhindern aufgrund ihrer hohen Steifigkeit ein hohes Füllvolumen in dem Füllraum einer Schrottpresse, wodurch entsprechend die Kapazität der Schrottpresse sinkt und die Bandgeschwindigkeit des zu besäumenden Bandes reduziert wird.

### Darstellung der Erfindung

Entsprechend ist es eine Aufgabe der vorliegenden Erfindung, eine Vorrichtung zum Besäumen von unterschiedlichem Walzgut anzugeben, welche die Gefahr einer Störanfälligkeit an der Vorrichtung verringert.

Diese Aufgabe wird durch eine Vorrichtung zum Besäumen von Walzgut mit den Merkmalen des Anspruchs 1 gelöst. Vorteilhafte Ausgestaltungen ergeben sich aus den Unteränsprüchen.

Entsprechend umfasst die Vorrichtung zum Besäumen von Walzgut in einem Walzwerk eine Besäumschere zum Besäumen der Kanten des Walzgutes, und einen hinter der Besäumschere angeordneten Saumschneider zum Zerteilen des abgetrennten Saumes, wobei hinter dem Saumschneider eine Saumpresse zum Verpressen des abgetrennten Saumes und/oder ein Saumwickler zum Aufwickeln des abgetrennten Saumes angeordnet ist. Erfindungsgemäß ist der Saumschneider aus dem Saumpfad herausfahrbar ist, so dass die Vorrichtung lediglich mit der Saumpresse betreibbar ist.

Der Begriff "hinter" meint in der vorliegenden Beschreibung "in Materialflußrichtung hinter", also "stromabwärts".

Dadurch, dass eine Kombination aus einem Saumschneider zum Zerteilen des Saumes und einer hinter dem Saumschneider angeordneten Saumpresse zum Verpressen des abgetrennten Saums vorgesehen ist, kann der Schrott von unterschiedlichem Walzgut transportfähig weiterverarbeitet werden. Durch den Saumpresse zugeführt werden kann. Auf diese Weise wird auch das Füllvolumen im Füllraum der Saumpresse erhöht, so dass eine effiziente Behandlung des Saumschrotts erreicht werden kann.

Um bei hohen Anlagengeschwindigkeiten Störungen im Besäumprozess zu vermeiden, wird der Ablenkungswinkel des Saumes bevorzugt möglichst klein gehalten. Um ein Kollidieren der Messerköpfe des Saumschneiders mit dem besäumten Band zu verhindern, sind die Messertrommeln des Saumschneiders bevorzugt unter dem besäumten Band angeordnet. Um hier den Ablenkungswinkel besonders klein zu halten, ist in einer bevorzugten Ausführungsform eine Umlenkvorrichtung hinter der Besäumschere vorgesehen, mittels welcher das besäumte Band nach oben hin abgelenkt wird, so dass der Öffnungswinkel zwischen dem abgetrennten Saum und dem besäumten Band vergrößert werden kann und gleichzeitig die eigentliche Ablenkung des abgetrennten Saumes verringert werden kann. Hierdurch können Störungen im Saumschneider reduziert oder vermieden werden, auch bei der Bearbeitung dünner und/oder weicher Bänder.

In einer weiteren vorteilhaften Ausgestaltung kann der Saumschneider aus dem Saumpfad herausgefahren werden, wenn eine Zerteilung des Saumes vor der Saumpresse nicht notwendig ist. Nur bei hochfesten Materialien ist eine Zerteilung des Saumes vor dem Eintritt in die Saumpresse notwendig, um ein hohes Füllvolumen im Füllraum der Schrottpresse zu erreichen. Bei normalen Festigkeiten des besäumten Bandes jedoch kann der Saumschneider entsprechend aus dem Pfad des abgetrennten Saumes herausgefahren werden, so dass die Vorrichtung lediglich mit der Saumpresse betrieben wird.

Bevorzugt und zur sicheren Führung des Saumes wird dazu bevorzugt ein Saumkanal anstelle des Saumschneiders in den Saumpfad eingefahren, welcher die durch das Herausfahren des Saumschneiders entstehende Lücke schließt. Um hier ein entsprechend synchrones Auswechseln zu erreichen, ist der Saumkanal bevorzugt mit dem Saumschneider gekoppelt, so dass bei einem Herausfahren des Saumschneiders aus dem Saumpfad der Saumkanal automatisch in die entstehende Lücke gefahren wird.

Die oben genannte Aufgabe wird auch durch ein Verfahren mit den Merkmalen des Anspruchs 11 gelöst.

Entsprechend weist das Verfahren zum Besäumen von Walzgut mit einer Vorrichtung gemäß der oben beschriebenen Vorrichtung beim Besäumen von Walzgut aus hochfestem Material die Schritte auf, dass der abgetrennte Saum mittels des Saumschneiders zerteilt wird und die zerteilten Saumstücke in der Saumpresse verpresst werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung in einer Seitenansicht der Anordnung einer Vorrichtung zum Besäumen von Walzgut in einem ersten Ausführungsbeispiel;
- Figur 2: einen vergrößerten Ausschnitt A aus Figur 1;
- Figur 3: eine schematische Darstellung der Anordnung einer Vorrichtung zum Besäumen von Walzgut mit einem Saumkanal anstelle des Saumschneiders;
- Figur 4: eine schematische Draufsicht auf die Vorrichtung zum Besäumen von Walzgut;
- Figur 5: eine schematische Darstellung einer Vorrichtung zum Besäumen von Walzgut mit einer Fördervorrichtung zum Ausfördern von Schrott; und
- Figur 6: eine schematische Darstellung einer Vorrichtung zum Besäumen von Walzgut mit einer Wickelvorrichtung zum Aufwickeln des Saumschrotts.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und auf eine wiederholte Beschreibung dieser Elemente wird in der nachfolgenden Beschreibung teilweise verzichtet, um Redundanzen zu vermeiden. Die Materialflussrichtung, das heißt die Transportrichtung des Walzgutes ist in den Figuren durch einen Pfeil symbolisiert.

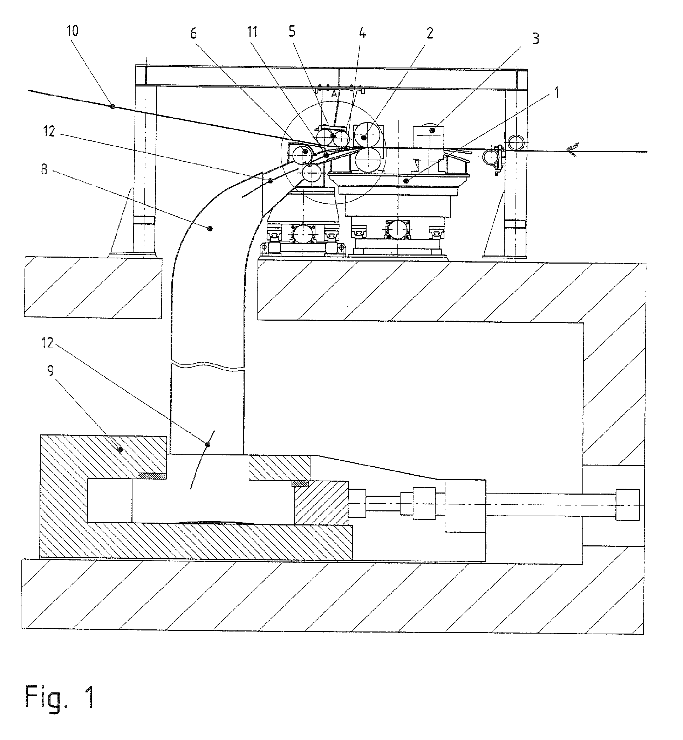

Figur 1 zeigt in einer schematischen Seitenansicht eine Vorrichtung zum Besäumen von Walzgut, in welcher das Walzgut in Form des Bandes 10, welches in Figur 1 von rechts nach links gefördert wird, mittels einer Besäumschere 1 besäumt wird. Die Besäumschere 1 weist einen entsprechenden Messerkopf 2 auf, mittels welchem in bekannter Art und Weise der Saum 11 vom Band 10 abgetrennt wird.

Um die Rüstzeiten zu verringern beziehungsweise die Verfügbarkeit der Anlage beim Messerwechsel und bei Saumstörungen zu erhöhen, ist weiterhin ein Standby-Messerkopf 3 vorgesehen, welcher eingesetzt werden kann, wenn der Messerkopf 2 gestört ist.

Hinter der Besäumschere 1 mit dem Messerkopf 2 ist ein Saumschneider 6 angeordnet, in welchen der abgetrennte Saum 11 eingefahren wird, und in welchem der Saum 11 dann entsprechend in separate Saumstücke 12 zerteilt wird. Der Saumschneider 6 weist insbesondere zwei Messertrommeln auf, welche gegeneinander laufen, und welche jeweils Messer aufweisen, mittels welchen der abgetrennte Saum 11 getrennt werden kann.

Unter dem Begriffen "vor" oder "hinter" einer bestimmten Komponente wird hier immer eine Anordnung vor oder hinter der jeweiligen Komponente in Bandlaufrichtung verstanden. Entsprechend ist die Saumpresse 9 in Bandlaufrichtung hinter der Saumschere 6 angeordnet.

Die zerteilten Saumstücke 12 fallen durch einen Schrotttrichter 8 in eine Saumpresse 9, welche einen entsprechenden Füllraum aufweist, in welchem die zerteilten Saumstücke 12 aufgenommen werden. Das erreichbare Füllvolumen in der Saumpresse 9 kann durch das Zerteilen des Saumes 11 in die zerteilten Saumstücke 12 erheblich erhöht werden, so dass ein hocheffizientes Verpressen der zerteilten Saumstücke 12 erreicht werden kann und entsprechend ein hochkompakter Quader aus Saumschrott erreicht werden kann.

Durch die Verbindung des Saumschneiders 6 mit der Saumpresse 9 kann entsprechend im Normalbetrieb ein sehr effizientes Handhaben des Saumschrotts erreicht werden.

Insbesondere beim Besäumen von Bändern 10 aus hochfesten Materialien ist das Zerteilen des abgetrennten Saumes 11 durch den Saumschneider 6 eine Voraussetzung dafür, dass überhaupt ein zufriedenstellendes Füllvolumen in dem Füllraum der Saumpresse 9 erreicht werden kann.

Entsprechend ist die in Figur 1 gezeigte Vorrichtung zum Besäumen von Walzgut über eine breite Produktpalette hinweg einsetzbar und kann insbesondere auch zum Handhaben des Saumschrotts bei der Herstellung beziehungsweise beim Besäumen von Bändern aus hochfesten Materialien verwendet werden.

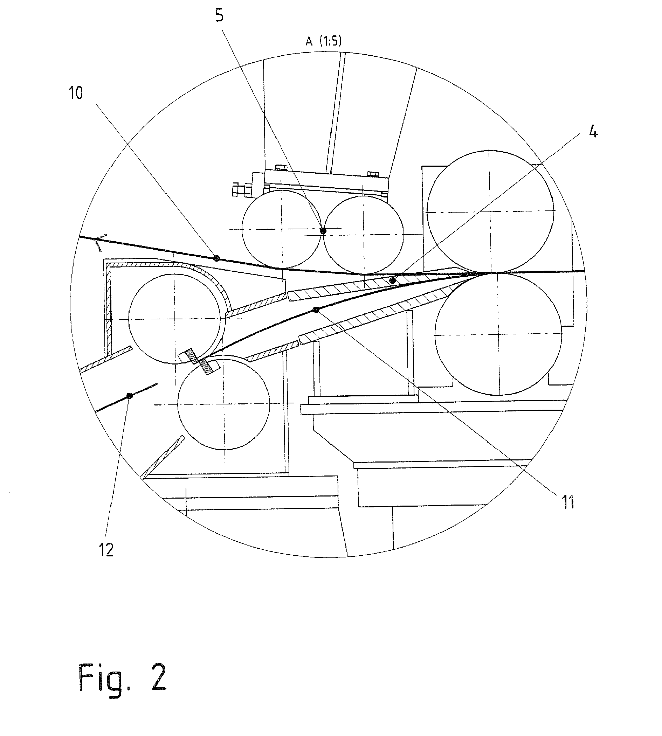

Um die Störanfälligkeit im Saumschneider 6 weiter zu reduzieren, wird der Ablenkungswinkel des Saumes 11 nach dem Messerkopf 2 der Besäumschere 1 gering gehalten. Dies wird, wie sich beispielsweise aus der in Figur 2 gezeigten Vergrößerung des Abschnittes A aus Figur 1 zeigt, dadurch erreicht, dass eine Umlenkvorrichtung in Form von Umlenkrollen 5 bereitgestellt wird, welche das besäumte Band 10 hinter dem Messerkopf 2 nach oben hin ablenkt, so dass der Saumschneider 6 unterhalb des Bandes derart angeordnet werden kann, dass der Ablenkwinkel gegenüber der ursprünglichen Förderrichtung für den abgetrennten Saum 11 reduziert wird. Der abgetrennte Saum 11 wird über eine Saumführung 4 dem Saumschneider 6 zugeführt.

Entsprechend kann mit der genannten Ausführungsform zum einen ein Behandeln des abgetrennten Saumes 11 in dem Saumschneider 6 kurz hinter dem Messerkopf 2 der Besäumschere 1 erreicht werden, gleichzeitig ist aber nur eine relativ geringe Ablenkung des abgetrennten Saumes 11 notwendig, um den abgetrennten Saum 11 dem Saumschneider 6 zuzuführen.

Mit anderen Worten kann durch das Bereitstellen der Umlenkvorrichtung in Form der Umlenkrollen 5 ein verbessertes Verhalten des abgetrennten Saumes 11 erreicht werden, und damit entsprechend die Anfälligkeit für Saumstörungen reduziert werden.

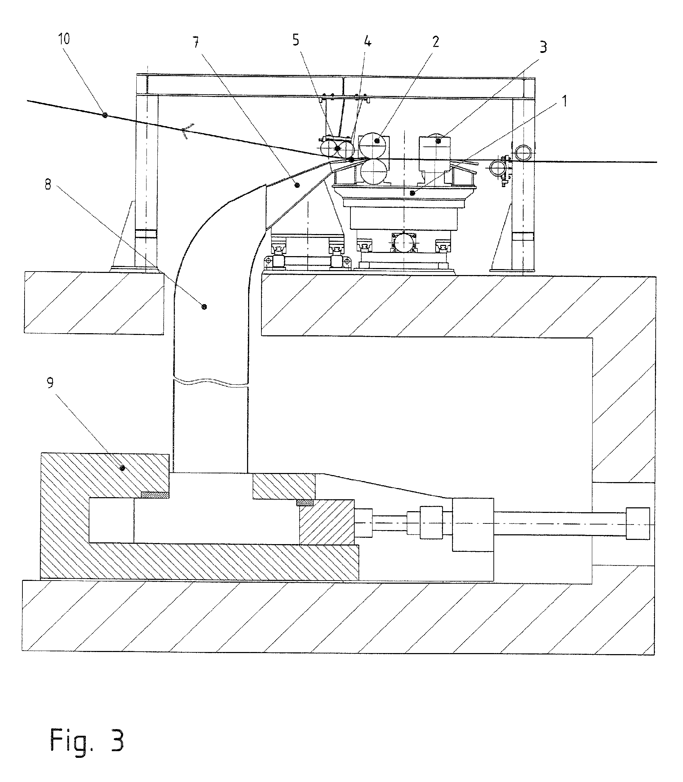

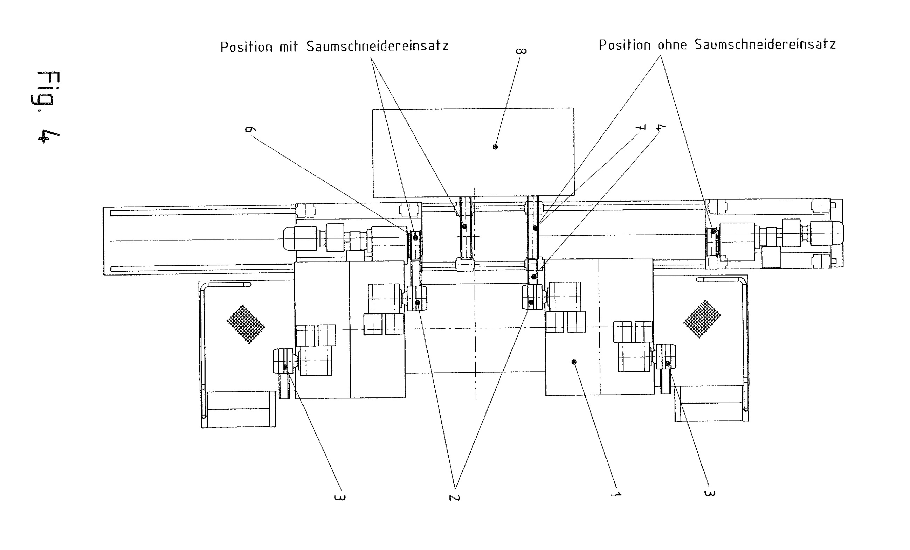

In bestimmten Konstellationen, nämlich beispielsweise bei der Besäumung von Bändern 10, welche nicht aus hochfesten Materialien bestehen, sondern beim Besäumen von Bändern 10 mit Materialien, welche normale Festigkeiten aufweisen, kann auf den Saumschneider verzichtet werden. Entsprechend kann der Saumschneider 6, welcher in den Figuren 1 und 2 gezeigt ist, aus dem Saumpfad herausgefahren werden und anstelle dessen ein in Figur 3 gezeigter Saumkanal 7 eingefahren werden, mittels dessen der abgetrennte Saum 11 in den Saumtrichter 8 eingeführt wird, und dann in die Saumpresse 9 übergeleitet wird. In Figur 4 wird ein Ausschnitt der Vorrichtung aus Figur 3 in einer Draufsicht gezeigt, wobei der einfahrbare Saumkanal 7 genauso wie der Saumschneider 6 gezeigt sind, welche auf Schienen wahlweise in den Saumpfad eingeschaltet werden können. In der gezeigten bevorzugten Variante sind die beiden Komponenten, nämlich der Saumkanal 7 und der Saumschneider 6, so miteinander gekoppelt, dass beim Einfahren des einen der jeweils andere aus dem Saumpfad herausgefahren wird. Auf diese Weise kann ein einfaches Umschalten beziehungsweise Herausfahren des Saumschneiders 6 erreicht werden und gleichzeitig der Saumkanal 7 eingefahren werden, so dass das Rüsten der Vorrichtung reibungslos und effizient durchgeführt werden kann.

Entsprechend ist die gezeigte Vorrichtung für ein breites Produktspektrum einsetzbar, insbesondere auch zur Behandlung von Saumschrott aus hochfesten Materialien, wobei in diesem Fall der Saumschneider 6 verwendet wird, um ein zufriedenstellendes Füllvolumen des Füllraums der Saumpresse 9 zu erreichen.

Wenn normalfeste Materialien besäumt werden, kann auf den Saumschneider 6 verzichtet werden und anstelle dessen ein Saumkanal 7 in den Saumpfad eingefahren werden, so dass der abgetrennte Saum direkt in den Füllraum der Saumpresse 9 eingeführt wird. Hierdurch kann ein energieeffizientes Behandeln des Saumschrotts erreicht werden, da der Saumschneider 6 nicht betrieben werden muss.

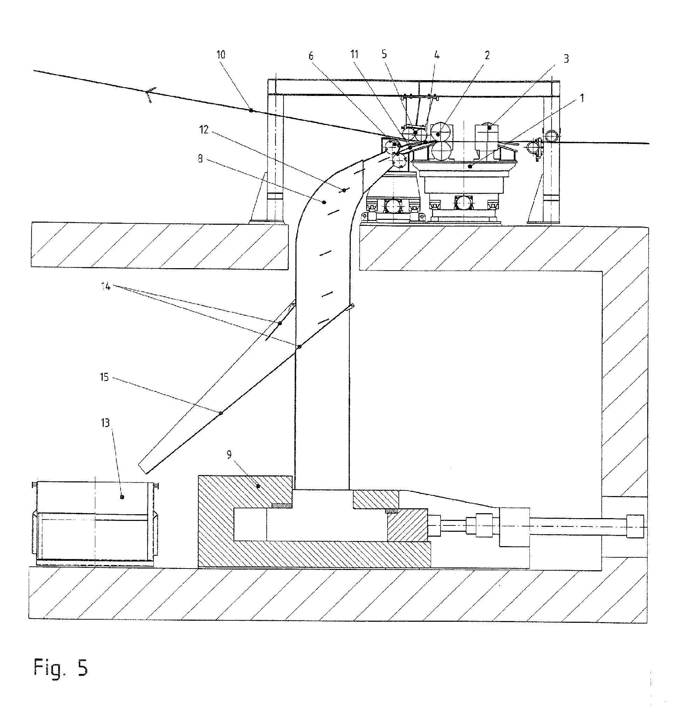

In Figur 5 ist eine weitere Ausprägung der Vorrichtung zum Besäumen von Walzgut gezeigt, bei welcher mittels einer Umlenkvorrichtung in Form der Schrottklappe 14 die zerteilten Saumstücke 12 aus dem Saumtrichter 8 über eine Schrottrutsche 15 direkt in einen Schrottkübel 13 umgeleitet werden. In dieser Variante der Vorrichtung zum Besäumen von Walzgut wird die Saumpresse 9 entsprechend quasi "überbrückt", so dass die zerteilten Saumstücke 12 direkt über einen Schrottkübel 13 der weiteren Behandlung zugeführt werden können.

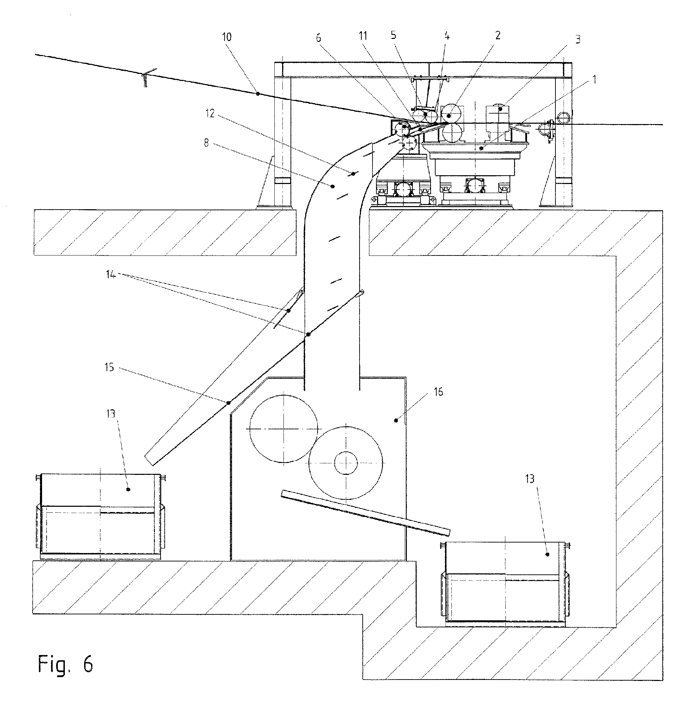

In Figur 6 ist in einer weiteren Ausführungsform, welche im Wesentlichen der in Figur 5 gezeigten Ausführungsform entspricht, wobei anstelle der in Figur 5 gezeigten Saumpresse 9 nun ein Saumwickler 16 vorgesehen ist, mittels welchem der Saumschrott zu Ballen aufgewickelt werden kann. Die entsprechend durch den Saumwickler 16 aufgewickelten Saumschrottballen werden dann über einen Schrottkübel 13 gesammelt und entsorgt.

Entsprechend ist die Vorrichtung zum Besäumen von Walzgut sehr flexibel bezüglich der Behandlung des Saumschrottes, so dass hier über den gesamten, zu besäumenden Produktbereich hinweg eine zuverlässige Handhabung des Saumschrotts erreicht werden kann.

Soweit anwendbar können alle einzelnen Merkmale, die in den einzelnen Ausführungsbeispielen dargestellt sind, miteinander kombiniert und/oder ausgetauscht werden.

### Bezugszeichenliste

- 1: Besäumschere
- 2: Messerkopf
- 3: Standby Messerkopf
- 4: Saumführung
- 5: Umlenkrolle
- 6: Saumschneider
- 7: Saumkanal
- 8: Saumtrichter
- 9: Saumpresse
- 10: Band
- 11: abgetrennter Saum
- 12: zerteilte Saumteile
- 13: Schrottkübel
- 14: Schrottklappe
- 15: Schrottrutsche
- 16: Saumwickler

## Patentansprüche

1. Vorrichtung zum Besäumen von Walzgut (10) in einem Walzwerk, umfassend eine Besäumschere (1, 2) zum Besäumen der Kanten des Walzgutes (10), und einen hinter der Besäumschere (1, 2) angeordneten Saumschneider (6) zum Zerteilen des abgetrennten Saumes (11), bei welcher hinter dem Saumschneider (6) eine Saumpresse (9) zum Verpressen des abgetrennten Saumes (12) und ein Saumwickler (16) zum Aufwickeln des abgetrennten Saumes (12) angeordnet ist,
**dadurch gekennzeichnet, dass**
der Saumschneider (6) aus dem Saumpfad herausfahrbar ist, so dass die Vorrichtung lediglich mit der Saumpresse (9) betreibbar ist.

2. Vorrichtung gemäß Anspruch 1, **dadurch gekennzeichnet, dass** anstelle des Saumschneiders (6) ein Saumkanal (7) in den Saumpfad einfahrbar ist.

3. Vorrichtung gemäß Anspruch 1 oder 2, **dadurch gekennzeichnet, dass** der Saumkanal (7) so an den Saumschneider (6) gekoppelt ist, dass beim Einfahren des Saumkanals (7) in den Saumpfad der Saumschneider (6) automatisch aus dem Saumpfad herausgefahren wird.

4. Vorrichtung gemäß einem der vorstehenden Ansprüche, **dadurch gekennzeichnet, dass** der Saumschneider (6) zwei gegenläufig rotierende Messertrommeln mit Messern zum Zerteilen des abgetrennten Saumes (11) in zerteilte Saumstücke (12) aufweist.

5. Vorrichtung gemäß einem der vorstehenden Ansprüche, **dadurch gekennzeichnet, dass** der Saumschneider (6) zwei gegenläufige Messertrommeln mit Nocken zum Knicken des abgetrennten Saums (11) aufweist.

6. Vorrichtung gemäß einem der vorstehenden Ansprüche, **dadurch gekennzeichnet, dass** eine Umlenkvorrichtung (5) hinter der Besäumschere (1, 2) zur Umlenkung des besäumten Bandes (10) nach oben vorgesehen ist und der Saumschneider (6) unter dem umgelenkten, besäumten Band (10) angeordnet ist.

7. Vorrichtung gemäß einem der vorstehenden Ansprüche, **dadurch gekennzeichnet, dass** eine Fördervorrichtung (14, 15) zwischen dem Saumschneider (6) und der Saumpresse (9) angeordnet ist, um Saumstücke (12) vor der Saumpresse (9) auszuschleusen, bevorzugt in einen separaten Schrottkübel (13).

8. Vorrichtung gemäß einem der vorstehenden Ansprüche, **dadurch gekennzeichnet, dass** die Saumpresse (9) zum Verpressen des abgetrennten Saumes (11) in Quader eingerichtet ist.

9. Vorrichtung gemäß einem der vorstehenden Ansprüche, **dadurch gekennzeichnet, dass** eine Fördervorrichtung (14, 15) zwischen dem Saumschneider (6) und dem Saumwickler (16) angeordnet ist, um Saumstücke (12) vor dem Saumwickler (16) auszuschleusen, bevorzugt in einen separaten Schrottkübel (13).

10. Verfahren zum Besäumen von Walzgut (10) mit einer Vorrichtung gemäß einem der vorstehenden Ansprüche,
**dadurch gekennzeichnet, dass**
zum Besäumen von Walzgut (10) aus hochfestem Material der abgetrennte Saum (11) mittels des Saumschneiders (6) zerteilt wird und die zerteilten Saumstücke (12) in der Saumpresse (9) verpresst werden und/oder mittels des Saumwicklers (16) zu Ballen gewickelt werden.

11. Verfahren gemäß Anspruch 10, **dadurch gekennzeichnet, dass** zum Besäumen von normalfestem Material der abgetrennte Saum (11) direkt in die Saumpresse (9) gefördert wird und dort verpresst wird und/oder direkt dem Saumwickler (16) zugeführt wird.

## Claims

1. Device for trimming rolling stock (10) in a rolling mill, comprising trimming shears (1, 2) for trimming the edges of the rolling stock (10) and a trimmings cutter (6), which is arranged behind the trimming shears (1, 2), for dividing up the separated trimmings (11), in which a trimmings press (9) for pressing the separated trimmings (12) and a trimmings winder (16) for winding up the separated trimmings (12) is or are arranged behind the trimmings cutter (6), **characterised in that** the trimmings cutter (6) is movable out of the trimmings path so that the device is operable merely with the trimmings press (9).

2. Device according to claim 1, **characterised in that** instead of the trimmings cutter (6) a trimmings channel (7) is movable into the trimmings path.

3. Device according to claim 1 or 2, **characterised in that** the trimmings channel (7) is so coupled to the trimmings cutter (6) that when the trimmings channel (7) is moved into the trimmings path the trimmings cutter (6) is automatically moved out of the trimmings path.

4. Device according to any one of the preceding claims, **characterised in that** the trimmings cutter (6) comprises two knife drums, which rotate in opposite sense, with knives for dividing up the separated trimmings (11) into divided trimmings pieces (12).

5. Device according to any one of the preceding claims, **characterised in that** the trimmings cutter (6) comprises two knife drums, which run in opposite sense, with dogs for kinking the separated trimmings (11).

6. Device according to any one of the preceding claims, **characterised in that** a deflecting device (5) is provided behind the trimmings shears (1, 2) for deflecting the trimmed strip (10) upwardly and the trimmings cutter (6) is arranged below the deflected, trimmed strip (10).

7. Device according to any one of the preceding claims, **characterised in that** a conveyor device (14, 15) is arranged between the trimmings cutter (6) and the trimmings press (9) in order to eject trimmings pieces (12) ahead of the trimmings press (9), preferably into a separate scrap bucket (13).

8. Device according to any one of the preceding claims, **characterised in that** the trimmings press (9) is arranged for pressing the separated trimmings (11) into blocks.

9. Device according to any one of the preceding claims, **characterised in that** a conveyor device (14, 15) is arranged between the trimmings cutter (6) and the trimmings winder (9) in order to eject trimmings pieces (12) ahead of the trimmings winder (9), preferably into a separate scrap bucket (13).

10. Method of trimming rolling stock (10) by a device according to any one of the preceding claims, **characterised in that** for trimming rolling stock (10) of high-strength material the separated trimmings (11) are divided up by means of the trimmings cutter (6) and the divided trimmings pieces (12) are pressed in the trimmings press (9) and/or wound by means of trimmings winder (16) into bales.

11. Method according to claim 10, **characterised in that** for the trimming of normal-strength material the separated trimmings (11) are conveyed directly to the trimmings press (9) and pressed there and/or directly fed to the trimmings winder (16).

## Revendications

1. Dispositif pour le rognage d'un produit de laminage (10) dans un laminoir, comprenant une cisaille de rives (1, 2) pour le rognage des bords du produit de laminage (10) et un coupe-bord (6) disposé derrière la cisaille de rives (1, 2) pour le morcellement du bord séparé (11), une presse-bord (9) pour la compression du bord séparé (12) et une bobineuse de bord (16) pour l'enroulement du bord séparé (12) étant disposés derrière le coupe-bord (6), **caractérisé en ce qu'**on peut faire sortir le coupe-bord (6) du chemin destiné au bord, d'une manière telle que le dispositif peut être mis en service uniquement avec la presse-bord (9).

2. Dispositif selon la revendication 1, **caractérisé en ce que** l'on peut introduire dans le chemin destiné au bord, un canal (7) destiné au bord, à la place du coupe-bord (6).

3. Dispositif selon la revendication 1 ou 2, **caractérisé en ce que** le canal (7) destiné au bord est couplé au coupe-bord (6) d'une manière telle que lorsqu'on introduit le canal (7) destiné au bord dans le chemin destiné au bord, le coupe-bord (6) quitte automatiquement le chemin destiné au bord.

4. Dispositif selon l'une quelconque des revendications précédentes, **caractérisé en ce que** le coupe-bord (6) présente deux tambours à lames du type à rotation antagoniste comprenant des lames pour le morcellement du bord séparé (11) en morceaux de bord (12).

5. Dispositif selon l'une quelconque des revendications précédentes, **caractérisé en ce que** le coupe-bord (6) présente deux tambours à lames du type à rotation antagoniste comprenant des cames pour le broyage du bord séparé (11).

6. Dispositif selon l'une quelconque des revendications précédentes, **caractérisé en ce qu'**un dispositif de déviation (5) est prévu derrière la cisaille de rives (12) pour dévier la bande rognée (10) vers le haut et le coupe-bord (6) est disposé en dessous de la bande rognée déviée (10).

7. Dispositif selon l'une quelconque des revendications précédentes, **caractérisé en ce qu'**un dispositif de transport (14, 15) est disposé entre le coupe-bord (6) et la presse-bord (9), pour écluser des morceaux de bord (12) devant la presse-bord (9), de préférence dans un panier à coquilles séparé (13).

8. Dispositif selon l'une quelconque des revendications précédentes, **caractérisé en ce que** la presse-bord (9) pour la compression du bord séparé (11) est montée dans un cadre.

9. Dispositif selon l'une quelconque des revendications précédentes, **caractérisé en ce qu'**un dispositif de transport (14, 15) est disposé entre le coupe-bord (6) et la bobineuse de bord (16), pour écluser des morceaux de bord (12) devant la bobineuse de bord (16), de préférence dans un panier à coquilles séparé (13).

10. Procédé pour le rognage d'un produit de laminage (10) comprenant un dispositif selon l'une quelconque des revendications précédentes, **caractérisé en ce que**, pour le rognage d'un produit de laminage (10) constitué d'un matériau à haute résistance, on soumet le bord séparé (11) à un morcellement au moyen du coupe-bord (6) et on comprime les morceaux de bord (12) dans la presse-bord (9) et/ou on les enroule en balles au moyen de la bobineuse de bord (16).

11. Procédé selon la revendication 10, **caractérisé en ce que**, pour le rognage d'un matériau à résistance normale, on transporte le bord séparé (11) directement dans la presse-bord (9) et on l'y comprime et/ou on l'achemine directement à la bobineuse de bord (16).
